# EUROPEAN PATENT SPECIFICATION

(11) **EP 2 890 571 B1**
(45) Date of publication and mention of the grant of the patent: **21.08.2019**
(21) Application number: 13826627.5
(22) Date of filing: 18.12.2013
(51) Int. Cl.: B60C 9/00, B60C 9/18, B60C 9/22

(54) **A TIRE REINFORCEMENT MATERIAL**
REIFENVERSTÄRKUNGSMATERIAL
MATÉRIAU DE RENFORT DE PNEUMATIQUE

(30) Priority: 25.12.2012 TR 201215231
(43) Date of publication of application: 08.07.2015
(73) Proprietor: Kordsa Teknik Tekstil A.S, Izmit / Kocaeli (TR)
(72) Inventor: SEVIM, Dogan, 41310 Kocaeli (TR); AKSOY, Kürsat, 41310 Kocaeli (TR); FIDAN, Sadettin, 30827 Garbsen (DE); MERTOL, Bekir Anil, 41310 Kocaeli (TR)
(74) Representative: Dericioglu Kurt, Ekin
(86) International application number: PCT/IB2013/061099
(87) International publication number: WO 2014/102672

(56) References cited:
- WO-A1-2014/060877
- DE-A1-102010 016 766
- JP-A- H09 156 312
- US-A1- 2003 111 128

## Description

### Field of the Invention

The present invention relates to the use of a tire reinforcement material which is formed of cords or yarns with different modulus and which has gained bielastic behaviour when subjected to a heat treatment as a result of different thermal shrinkage properties.

### Background of the Invention

The hybrid cords used as cap ply reinforcement material in pneumatic tire technology are acquired by twisting yarns having different properties with each other.

The most important difference between the yarns in the hybrid cords with two or more layers(plies) is their elastic modulus. The elastic modulus refers to the necessary force to increase the length of a material having a unit cross section area(mm²) for 100%. Bielasticity is having double modulus behaviour in stress-strain curve. In other words it is to see first low and then high modulus in stress-strain curves of fabric. For example in a double layered(plied) hybrid cord, if one of the yarns forming the layers has low modulus, the other one has high modulus (such as nylon and aramide). The function of the yarn with low modulus in the hybrid cord (such as nylon) is to enable the cap ply reinforcement fabric to elongate with the low forces which is required in tire production process and prevent tense cord formation and to cut the belt rubber which is placed under the cap ply layer(feature of the process). The function of the yarn with high modulus (such as aramide) in the hybrid cord is to prevent the tire growth caused by the centrifugal force created by the belt layers with steel cord at high speed or to keep at an acceptable level (feature of the performance).

The circular cross-sectional area of the classic hybrid cords which fulfill the process and performance requirements, is equal to the total of the cross-sectional areas of the related yarns. Therefore the diameter (thickness) of the hybrid cord increases in proportion with the total dtex values of the yarns with high and low modulus. Dtex is a yarn thickness measurement. It is the gram weight of the 10.000 meters of length of the yarn. The low and high modulus yarns of the classic hybrid cord are side by side with each other in the new product, not cabled together.

An important problem with the classic hybrid cords is the difficulty in changing the process and performance related properties independent from each other. That is, changes in dtex, twist and numbers of low and high modulus yarns exhibit themselves not only in pre-elongation or high modulus area, but also in the characteristic of the transition area from low modulus to high modulus. In other words, the said properties are interdependent in the classic hybrid cords. However, the performance features of the tire such as comfort, maneuver ability and durability are affected from the shape and range of the transition zone of the hybrid cord from low modulus to high modulus in some degree.

South Korean Patent document no KR20050030447, an application known in the state of the art, discloses hybrid cords having high performance used in the tire as cap ply. The objective of the said invention is to provide a tire structure the adhesion of which to the rubber is enhanced, the strength of which is increased, the driving comfort of which is developed and the processabilty of which is enhanced by forming a dipped hybrid cord comprised of polyethylene naphthalate (PEN) and lyocell multi-filaments.

DE102010016766, JPH09156312, US2003/0111128A1 and WO2014060877 are also known from prior art.

### Summary of the Invention

The objective of the present invention is to provide a tire reinforcement material which has the process and performance related properties of the classic hybrid cord fabric, and also having the reduced fabric thickness (gauge reduction).

Another objective of the present invention is to provide a tire reinforcement material which enables the process and performance related properties of the tire reinforcement fabric to be optimized independent from each other.

### Detailed Description of the Invention

"A tire reinforcement material" developed to fulfill the objective of the present invention is illustrated in the accompanying figures wherein,
Figure 1 is view of the reinforcement fabric having hybrid cords obtained by twisting yarns with different properties.
Figure 2 is the view of the reinforcement fabric having cords twisted with yarns having different properties next to each other.
Figure 3 is the graphic showing the tensile behavior before heat treatment (A), after heat treatment (B), after heat treatment (C) (with more thermal shrinkage) in the hybrid fabric structure.
Figure 4
   (a) is the view of the hybrid reinforcement fabric before heat treatment.
   (b) is the view of the inventive tire reinforcement material after heat treatment.
Figure 5
   (a) is the view of the hybrid reinforcement fabric having adjacent cord pairs before heat treatment.
   (b) is the view of the inventive tire reinforcement material having adjacent cord pairs after heat treatment.

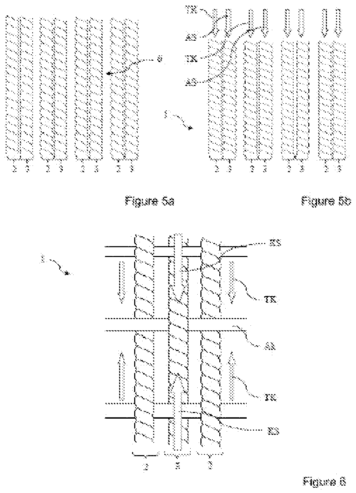

Figure 6 is the view of the formation of bielastic property during heat treatment.

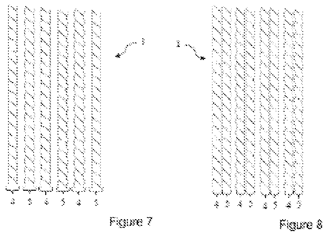

Figure 7 is the view of the hybrid reinforcement fabric with parallel yarns next to each other(side by side).
Figure 8 is the view of the hybrid reinforcement fabric having adjacent yarn pairs.

The components shown in the figures are each given reference numerals as follows:
1. Tire reinforcement material
2. Cord with low modulus
3. Cord with high modulus
4. Yarn with low modulus
5. Yarn with high modulus
6. Spacing
Ck. Warp cord
Ak. Weft cord
AS. Axial compression
TK. Thermal shrinkage
KS. Compressive stress (applied by the warp cords)

The inventive tire reinforcement material (1) comprises cords or yarns with different modulus and thermal shrinkage properties as consecutive and parallel warps (Ck), and becomes a fabric having bielastic behaviour after heat treatment. The tire reinforcement material (1) comprises warps (Ck) are comprised of cords with low modulus (2) and cords with high modulus (3) or yarns with low modulus (4) and yarns with high modulus (5). One case, the tire reinforcement material (1) is used in the vehicle tire, the reinforcement material (1) is cut as strips and wound on the belt package of the tire such that it will make 0 to 5° angle with the equatorial plane, and it is used as cap ply reinforcement fabric. The width of the said strips varies between 5 and 25 mm, and they are used without rubber as tacky strip.

In the preferred embodiment of the invention, cords or yarns with low modulus (2, 4) used in the tire reinforcement material (1) can be nylon 6.6 or PET; and the cords or yarns with high modulus (3, 5) can be aramide, rayon, PEN, carbon fiber or glass fiber.

In the preferred embodiment of the invention, the dtex values of cords or yarns (2, 3, 4, 5) in the tire reinforcement material (1) are between 100 and 3000, preferably 100 to 1000. The twist levels of the said cords and yarns (2, 3, 4, 5) are between 20 and 1000 tpm (turns per meter). The number of cords or yarns (2, 3, 4, 5) per decimeter (epdm: ends per decimeter) ranges between 50 to 200.

Cords or yarns with low modulus (2, 4) and cords or yarns (3, 5) with high modulus present in the inventive tire reinforcement material can be as cord pairs or yarn pairs. There is a certain spacing (6) between the cord or yarn pairs. The distribution of the cords or yarns (2, 3, 4, 5) can be alternating or different. The dtex values of the cords or yarns (2, 3, 4, 5) can be close to each other or different.

The inventive tire reinforcement material (1) is preferably wound on the belt package as strip and used as cap ply material.

The inventive tire reinforcement material (1) used in pneumatic tires comprise alternating and parallel cords and/or yarns with low and high modulus. The thermal shrinkage (TS) of the cords and yarns with low modulus (2, 4) in the tire reinforcement material (1) is higher than that of the cords or yarns with high modulus (3, 5).

When a tensile force or load is applied on the greige fabric or strips cut from the said greige fabric, they do not show any bielastic behavior. The cords or yarns with low modulus (2, 4) in the fabric upon exposure to high temperature during dipping process (which is a heat treatment) shrink, and while shrinking they cause the cords or yarns with high modulus (3, 5) which shrink less or do not shrink at all to be compressed axially or micro-buckled. The inventive reinforcement material (1) coming out of the said heat treatment or the strips cut from this material exhibit bielastic property when a tensile force or load is applied on them.

The hybrid cords obtained by twisting yarns with different modulus (4, 5) together and their greige fabric exhibit bielastic behavior under tension, while the greige fabric comprising cords with different modulus (2, 3) next to each other does not exhibit bielastic behavior. In the inventive tire reinforcement material (1), the fabric comprised of mixed cords(hybrid fabric) are subjected to heat treatment, and the fabric is enabled to become bielastic via the cords having different thermal shrinkage (TK) values.

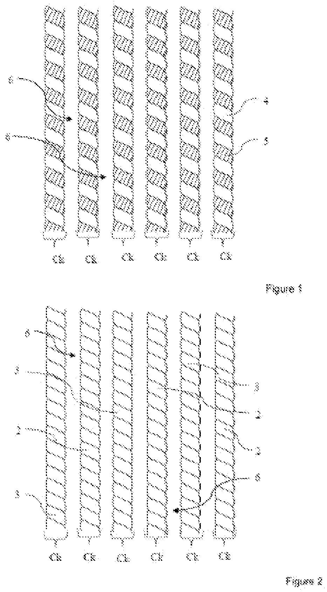

The inventive tire reinforcement material (1) is obtained by bringing the yarns and/or cords with different elastic modulus and thermal shrinkage features (2, 3, 4, 5) parallel and next to each other (Figure 1a, 1b). The thermal shrinkage (TK) of the cords and yarns with low modulus (2, 4) in the said fabrics is higher than that of the thermal shrinkage (AS) of the cords or yarns with high modulus (3, 5).

The inventive reinforcement material (1) comprised of cords with different modulus (2, 3) does not show bielastic property when it is in greige fabric form, it shows bielastic property after dipping and heat treatment. When a tensile force is applied to the inventive tire reinforcement material (1) after heat treatment, first it shows low force elongation (low modulus) and then high force elongation (high modulus). (Figure 2)

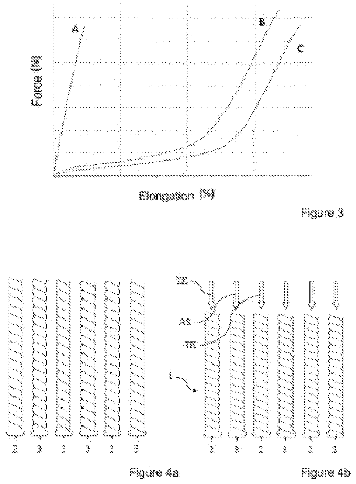

During the inventive reinforcement material (1) gaining bielastic property, greige fabric is subjected to heat treatment, the yarns or cords with low modulus (2, 4) shrink because of high temperature and low tension, while the yarns or cords with high modulus (3, 5) next to them are forced to be compressed axially (AS) (Figure 3, 4, 5).

The warp cords (Ck) present next to each other in the inventive tire reinforcement material (1) may have a certain spacing (6) between themselves or the double cords can be adjacent as paired. The axial compression of the cords with high modulus (3) is formed through the adhesive (RFL film) between itself and the low modulus cord (2) in adjacent position, and by the compressive stress (KS) applied by the weft cords (Ak). In cases wherein a certain distance is present between the cords with low and high modulus (2, 3), the compressive stress (KS) is applied on the cord with high modulus (3) only by the weft cords (Ak). As a result, depending on the construction of the cord or yarn with high modulus (3, 5), axial compression (AS) or micro buckling can be experienced. In case of very thin belt strips, which are obtained from the inventive tire reinforcement material (1), not warp cords (Ck), but twisted strands as warp having the dtex values of which are below 1000 are used next to each other or adjacent as pairs (Figure 6a, 6b).

When the inventive tire reinforcement material (1) is used as cap ply reinforcement fabric in the tire, the forces caused by the increase in diameter of the tire during production process are carried by the cords with low modulus (2). The cords with high modulus (3) which are axially compressed (AS) elongate without carrying any significant force and they don't resist to the process expansion.

In order to decrease the weight and the rolling resistance in pneumatic tires, it is thought that yarns or cords with low dtex value, having low and high modulus (2, 3, 4, 5) are used next to each other and parallel to each other in tire reinforcement fabrics and they show bielastic (hybrid) behavior under tensile forces. Yarns or cords with low modulus in the inventive tire reinforcement material (1) have higher thermal shrinkage than the yarns or cords with high modulus.

The inventive tire reinforcement material (1)
1. Is much thinner than the reinforcement materials produced with classic hybrid cords with similar property.
2. Enables less rubber usage in the tire and thus causes both weight and rolling resistance to decrease.
3. Can be applied in strips as ready to use reinforcement material.
4. Provides improvement in tire performance by optimizing the transition zone from low modulus to high modulus in stress-strain behaviour.

Within the framework of these basic concepts, it is possible to develop a wide variety of embodiments of the inventive tire reinforcement material (1). The invention is as defined in the claims.

## Claims

1. Use of a tire reinforcement material (1) as cap ply by winding it on a tire belt in strips such that it makes 0 to 5° with the equatorial plane, wherein
said tire reinforcement material (1) is obtained from a fabric which comprises warps (Ck) aligned parallel to each other,
said warps (Ck) comprised of cords with low modulus (2) and cords with high modulus (3) or yarns with low modulus (4) and yarns with high modulus (5) and
wherein in said fabric the thermal shrinkage (TK) of the cords or yarns with low modulus (2, 4) is higher than that of the cords or yarns with high modulus (3, 5) and
wherein the reinforcement material is subjected to a heat treatment such that said warps (Ck) gain bielastic behaviour as a result of the different thermal shrinkages at said heat treatment.

2. Use of a tire reinforcement material (1) according to claim 1, **characterized in that** cords or yarns with low modulus (2, 4) used in the tire reinforcement material (1) are nylon 6.6 or PET; and the cords or yarns with high modulus (3, 5) are aramide, rayon, PEN, carbon fiber or glass fiber.

3. Use of a tire reinforcement material (1) according to claim 1, **characterized by** cords or yarns (2, 3, 4, 5) the dtex values of which are between 100 and 3000.

4. Use of a tire reinforcement material (1) according to claim 1, **characterized by** cords or yarns (2, 3, 4, 5) the twist levels of which are between 20 and 1000 tpm (turns per meter).

5. Use of a tire reinforcement material (1) according to claim 1, **characterized by** cords or yarns (2, 3, 4, 5) the numbers (end counts) of which are between 50 and 200 ends per decimeter(epdm).

6. Use of a tire reinforcement material (1) according to claim 1, **characterized by** yarns or cords (2, 4) with low modulus which enable the yarns or cords with high modulus (3, 5) next to them to be axially compressed while thermal shrinking depending on the temperature and tension during heat treatment.

7. Use of a tire reinforcement material (1) according to claim 1, **characterized by** warp cords (Ck) which have a spacing (6) in between them creating an area for movement.

8. Use of a tire reinforcement material (1) according to claim 1, **characterized by** warp cords (Ck) which are in pairs adjacent to each other.

9. Use of a tire reinforcement material (1) according to claim 1, **characterized in that** cap ply reinforcement material (1) is cut as strips, the width of which varies between 5 and 25 mm and which are used as tacky strips without rubber.

## Patentansprüche

1. Verwendung eines Reifenverstärkungsmaterials (1) als Kappenlage durch Wickeln auf einem Reifengürtel in Streifen, so dass es 0 bis 5° mit der Äquatorebene bildet, wobei
das Reifenverstärkungsmaterial (1) aus einem Gewebe erhalten wird, das Ketten (Ck) umfasst, die parallel zueinander ausgerichtet sind,
wobei die Ketten (Ck) aus Kordeln mit niedrigem Modul (2) und Kordeln mit hohem Modul (3) oder Garnen mit niedrigem Modul (4) und Garnen mit hohem Modul (5) bestehen und
wobei in diesem Gewebe die thermische Schrumpfung (TK) der Kordeln oder Garne mit niedrigem Modul (2, 4) höher ist als die der Kordeln oder Garne mit hohem Modul (3, 5) und
wobei das Verstärkungsmaterial einer solchen Wärmebehandlung unterworfen ist, dass die Ketten (Ck) infolge der unterschiedlichen Wärmeschrumpfungen bei der Wärmebehandlung ein bielastisches Verhalten erlangen.

2. Verwendung eines Reifenverstärkungsmaterials (1) nach Anspruch 1, **dadurch gekennzeichnet, dass** in dem Reifenverstärkungsmaterial (1) verwendete Kordeln oder Garne mit niedrigem Modul (2, 4) aus Nylon 6.6 oder PET sind; und die Kordeln oder Garne mit hohem Modul (3, 5) aus Aramid, Rayon, PEN, Kohlefaser oder Glasfaser bestehen.

3. Verwendung eines Reifenverstärkungsmaterials (1) nach Anspruch 1, **gekennzeichnet durch** Schnüre oder Garne (2, 3, 4, 5), deren dtex-Werte zwischen 100 und 3000 liegen.

4. Verwendung eines Reifenverstärkungsmaterials (1) nach Anspruch 1, **gekennzeichnet durch** Kordeln oder Garne (2, 3, 4, 5), deren Verdrehungsgrad zwischen 20 und 1000 tpm (Windungen pro Meter) liegt.

5. Verwendung eines Reifenverstärkungsmaterials (1) nach Anspruch 1, **gekennzeichnet durch** Schnüre oder Garne (2, 3, 4, 5), deren Zahlen (Endzahlen) zwischen 50 und 200 Enden pro Dezimeter (epdm) liegen.

6. Verwendung eines Reifenverstärkungsmaterials (1) nach Anspruch 1, **gekennzeichnet durch** Garne oder Kordeln (2, 4) mit niedrigem Modul, die es ermöglichen, die Garne oder Kordeln mit hohem Modul (3, 5) daneben axial unter thermischem Schrumpfen in Abhängigkeit von der Temperatur und Spannung während der Wärmebehandlung zu pressen.

7. Verwendung eines Reifenverstärkungsmaterials (1) nach Anspruch 1, **gekennzeichnet durch** Kettkordeln (Ck), die einen Abstand (6) zwischen sich aufweisen um einen Bereich für Bewegung zu schaffen.

8. Verwendung eines Reifenverstärkungsmaterials (1) nach Anspruch 1, **gekennzeichnet durch** Kettkordeln (Ck), die paarweise nebeneinander liegen.

9. Verwendung eines Reifenverstärkungsmaterials (1) nach Anspruch 1, **dadurch gekennzeichnet, dass** das Kapplagenverstärkungsmaterial (1) als Streifen geschnitten ist, deren Breite zwischen 5 und 25 mm variiert und die als klebrige Streifen ohne Gummi verwendet werden.

## Revendications

1. Utilisation d'un matériau de renforcement de pneu (1) comme nappe de sommet en l'enroulant en bandes sur une ceinture de pneu de telle sorte qu'il fasse 0 à 5° avec le plan équatorial, dans laquelle
ledit matériau de renforcement de pneu (1) est obtenu à partir d'un tissu qui comprend des chaînes (Ck) alignées parallèlement les unes aux autres,
lesdites chaînes (Ck) comprennent des cordes à faible module (2) et des fils à module élevé (3) ou des fils à faible module (4) et des cordes à module élevé (5), et
dans laquelle, dans ledit tissu, le retrait thermique (TK) des cordes ou fils à faible module (2, 4) est supérieur à celui des cordes ou fils à module élevé (3, 5) et
dans laquelle le matériau de renforcement est soumis à un traitement thermique tel que lesdites chaînes (Ck) acquièrent un comportement biélastique en raison des différents retraits thermiques lors dudit traitement thermique.

2. Utilisation d'un matériau de renforcement de pneu (1) selon la revendication 1, **caractérisée en ce que** les cordes ou fils à faible module (2, 4) utilisés dans le matériau de renforcement des pneus (1) sont en nylon 6.6 ou en PET ; et les cordes ou fils à haut module (3, 5) sont en aramide, rayonne, PEN, fibre de carbone ou fibre de verre.

3. Utilisation d'un matériau de renforcement de pneu (1) selon la revendication 1, **caractérisée par** les cordes ou fils (2, 3, 4, 5) dont les valeurs dtex sont comprises entre 100 et 3000.

4. Utilisation d'un matériau de renforcement de pneu (1) selon la revendication 1, **caractérisée par** les cordes ou fils (2, 3, 4, 5) dont le niveau de torsion est compris entre 20 et 1000 tpm (tours par mètre).

5. Utilisation d'un matériau de renforcement de pneu (1) selon la revendication 1, **caractérisée par** les cordes ou fils (2, 3, 4, 5) dont les nombres (comptes de fin) sont compris entre 50 et 200 extrémités par décimètre (epdm).

6. Utilisation d'un matériau de renforcement de pneu (1) selon la revendication 1, **caractérisée par** les fils ou cordes (2, 4) à faible module qui permettent aux fils ou cordes à module élevé (3, 5) voisins d'être comprimés axialement tout en se rétractant thermiquement en fonction de la température et de la tension lors du traitement thermique.

7. Utilisation d'un matériau de renforcement de pneu (1) selon la revendication 1, **caractérisée par** des cordes de chaîne (Ck) qui ont un espacement (6) entre eux créant une zone de mouvement.

8. Utilisation d'un matériau de renforcement de pneu (1) selon la revendication 1, **caractérisée par** des cordes de chaîne (Ck) qui sont en paires adjacentes les unes aux autres.

9. Utilisation d'un matériau de renforcement de pneu (1) selon la revendication 1, **caractérisée par** le matériau de renforcement (1) de la nappe de sommet est coupé en bandes, dont la largeur varie entre 5 et 25 mm et qui sont utilisés comme bandes adhésives sans caoutchouc.
